# EUROPEAN PATENT SPECIFICATION

(11) **EP 3 562 301 B1**
(45) Date of publication and mention of the grant of the patent: **24.07.2024**
(21) Application number: 17889268.3
(22) Date of filing: 27.12.2017
(51) Int. Cl.: A01K 73/045, B63B 21/66

(54) **TRAWL DOOR WITH FIXATION POINTS FOR PULLING AFTER A VESSEL**
SCHLEPPNETZKLAPPE MIT BEFESTIGUNGSSTELLEN ZUM ZIEHEN HINTER EINEM SCHIFF
PANNEAU DE CHALUT AVEC POINTS DE FIXATION A TIRER DERRIÈRE UN VAISSEAU

(30) Priority: 29.12.2016 DK PA201671062
(43) Date of publication of application: 06.11.2019
(73) Proprietor: MLD APS, 6700 Esbjerg (DK)
(72) Inventor: BAUNGAARD, Gregers, 6700 Esbjerg (DK); MUELLER, Jan, 8700 Horsens (DK)
(74) Representative: Budde Schou A/S
(86) International application number: PCT/DK2017/050454
(87) International publication number: WO 2018/121829

(56) References cited:
- WO-A1-2008/129068
- WO-A1-2011/135006
- WO-A1-2012/070952
- GB-A- 2 161 351
- GB-A- 2 399 883
- GB-A- 360 808
- RU-C2- 2 346 433
- US-A1- 2012 067 265

## Description

### TECHNICAL FIELD

The present disclosure relates generally to trawl doors used for trawl fishing, and more particularly, to trawl doors adapted for stable and efficient operation.

### BACKGROUND OF THE INVENTION

A trawl door used to tow a trawl after a trawler. The trawl door is secured in a wire up to the trawler and two wires down to the trawl.

The location of these features up to trawlers, placed on the inside of the trawl door, while those down to the trawl, attached to the rear of the bucket. This contributes to the trawl door operating in a relatively high angle to the pulling direction.

Modern trawl fisheries are complicated by an increase in operating costs due primarily to increasingly expensive fuel costs affecting both the catch of as well as the transportation to market of fish and value added fish product. The increase in operating costs in combination with the tendency of regulatory authorities to impose fixed catch quotas in one form or another have combined to force trawl fishing vessel operators to increase the efficiency of their trawl systems. One impact of this demand for increased efficiency of the trawl system is a demand for increased trawl door efficiency, and in particular an ever increasing need for trawl doors that are efficient at shallow depths and high speeds, as modern trawling increasingly requires economic operations at shallow depths and high speeds.

In addition, more and more modern trawling vessels must participate in a variety of different fisheries in order to be economical, and thus must use a variety of different trawls, having different requirements for the opening parameters of their trawl mouths. For example, some fisheries require trawls exhibiting a high vertical opening and a moderate horizontal opening (high opening trawls), meaning that the trawl doors should provide less spread and thus should generate less water resistance, while other fisheries require trawls exhibiting a low vertical opening and a maximal horizontal opening (wide body trawls), meaning maximal spreading forces are needed from the trawl doors.

While a towed trawl door having a particular shape may operate stably throughout a range of angle of attack, when towed through water at a larger angle of attack trawl doors often exhibit instability and/or low efficiency. Moreover, how the towing vessel maneuvers can vary a trawl door's angle of attack.

Trawl doors operating at large angles of attack create enough drag induced directional forces on the trawl doors so as to impart sufficient stability to the trawl door system to thereby maintain the trawl doors in a workable orientation in the presence of a multitude of destabilizing forces routinely imparted to a trawl door during use. Destabilizing forces result from, for example, side currents, imperfections in rigging, and loss of forward through-water speed affecting an inboard trawl door during turning of a trawling vessel. For example, when a towing vessel turns the inboard trawl door can become almost stationary relative to the water. A similar situation can arise when a trawl door experiences a strong side current. Another condition which can cause trawl door instability is when some portion of the trawl contacts the sea floor. As is readily apparent, a trawl contacting the sea floor increases the force applied to the trawl door through the lower towing bridle in comparison with the force applied through the upper towing bridle. Stabilizing trawl doors when they operate under conditions such as those described above usually requires that the trawl doors operate at a larger angle of attack particularly at slower towing speeds.

US 2008271356 discloses a trawl door with an upper, a lower, and a middle frame defining an intermediate frame positioned between the upper and lower frames thereby establishing an upper section. Panels of aerofoil construction are provided, which are placed over each other and connected to the frames in their respective ends. There are no movable and remotely controllable flaps mounted under any of the panels.

GB 2161351 describes an otter board/trawl door comprising a mounting frame that may comprise an upper longitudinally extending end member formed by a plate and a lower longitudinally extending end member formed by a box keel section. Moreover the otter board comprises hydrofoil means/panels spaced apart along the mounting frame from a leading end of the otter board to a trailing end, thereby establishing channels for water to flow through the otter board. The pulling points are provided in otter board/trawl door exterior of the hydrofoils.

RU 2346433 C2 discloses a trawl door having an upper section and a lower section sections divided by a central frame construction consisting of a traction plate and end plates. The trawl door comprises an upper traction plate and a lower traction plate end a number of upper and lower panels/foils of aerofoil construction arranged between the upper and lower traction plates respectively and the central frame construction. The trawl door further comprises a connecting link for attaching a towing wire which connecting link is attached to the central plate of the middle frame construction. The connection link is arranged intermediate the panel sections and exterior of the foils and thus exterior of the channels and the opening of the channels provided by the foils.

Higher angles of attack are required at slower towing speeds to obtain a sufficiently large drag induced force vector required to stabilize trawl doors at slower towing speeds. Furthermore, when trawl doors lose their ability to spread they may tangle with each other.

There exists a long felt need for a trawl door that is highly efficient at lower angles of attack.

### SUMMARY OF THE INVENTION

The present invention solves the above mentioned problems, and provides a trawl door defined by claim 1 that is highly efficient at lower angles of attack.

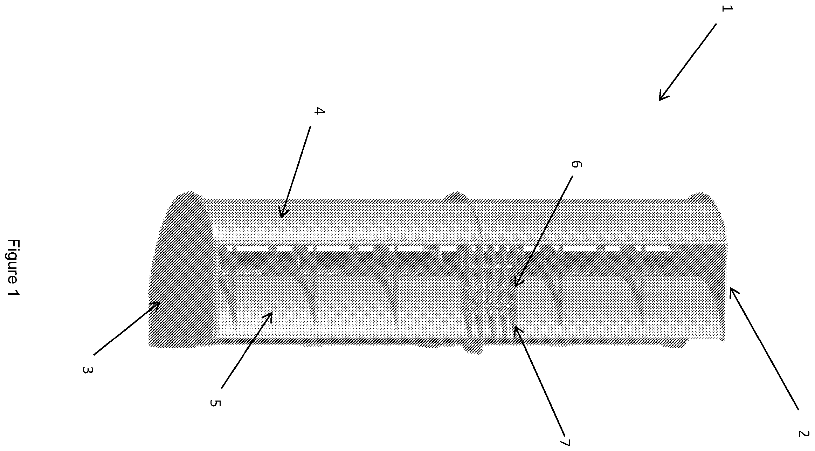

The location of the pulling points up to the ship has shown to be of major importance. According to the present invention these pulling points must be placed in the channel of the trawl door as shown in figure 1.

By having the pulling point in the channels of the trawl door it may be operated in a significantly lower angle of attack between 10 and 20 degrees compared to prior art technology, which is operated in angles between 25 and 50 degrees.

At the location in the middle of the channels a much lower angle of attack may be obtained.

Specifically the present invention provides a trawl door (1) for being pulled by a trawler, comprising:
an upper frame (2) defining a top edge of the device; a lower frame (3) defining a bottom edge of the device; panels (4, 5) connected between the lower (3) and upper frames (2) frames, said panels preferably being of aerofoil construction and connected to the frames in their respective ends, and said panels are placed over each other thereby establishing channels for water to flow through the trawl door when being pulled by the trawler, wherein pulling points (7) are provided in the channels.

Configured in this way, the improved trawl door is improved in comparison with a conventional trawl door. Especially the trawl door of the present invention improves stability when the trawl door is towed through water at a high angle of attack.

### BRIEF DESCRIPTION OF THE DRAWINGS

Figure 1 shows in perspective a trawl door of the present invention.
Figure 2 shows a flexible pulling point.

### DETAILED DESCRIPTION OF THE INVENTION

Referring to Figure 1 the trawl door of the present invention has an upper frame (2) defining a top edge of the device; a lower frame (3) defining a bottom edge of the device; panels (4, 5) connected between the lower (3) and upper frames (2) frames, said panels preferably being of aerofoil construction and connected to the frames in their respective ends, and said panels are placed over each other thereby establishing channels for water to flow through the trawl door when being pulled by the trawler, wherein pulling points (7) are provided in the channels so as to produce angles of attack relative to the trawler of between 10 and 20 degrees.

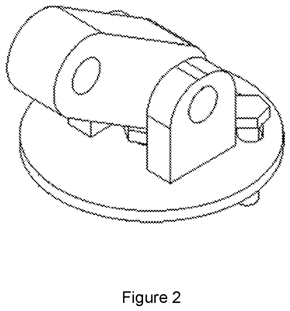

Referring to Figure 2 there is shown a flexible pulling point, which is based on a hinged solution, wherein the pulling point is placed on a member that is pivotable around a point thereby rendering the pulling more flexible, i.e. work as a spring member.

The pulling point is configured as a base member having pivot point for a pivotable member with a pulling point in the end thereof.

The lower frame (3) is provided with means (not shown) for suspending the trawl door (1) so that it may rest on the stern or a part of the trawler when not in use, where the means are lifting points (not shown) placed below the lower frame (3).

## Claims

1. A trawl door (1) for being pulled by a trawler, comprising:
an upper frame (2) defining a top edge of the device; a lower frame (3) defining a bottom edge of the device; panels (4, 5) connected between the lower (3) and upper frames (2) frames, said panels being of aerofoil construction and connected to the frames in their respective ends, and said panels are placed over each other thereby establishing one or more channels for water to flow through the trawl door when being pulled by the trawler, said trawl door being **characterized in that** pulling points (7) are provided in the channels so as to produce angles of attack of the trawl door relative to the trawler of between 10 and 20 degrees.

2. Trawl door (1) according to claim 1, wherein the pulling points are made in plates (6) placed inside the channels in the intermediate region between the lower (3) and upper (2) frames.

3. Trawl door (1) according to claim 1 or 2, wherein one or more of the pulling points are configured as flexible pulling points arranged as a hinge solution.

4. Trawl door (1) according to claim 3, wherein the one or more flexible pulling points are configured as a base member having pivot point for a pivotable member with a pulling point in the end thereof.

5. Trawl door (1) according to anyone of the claims 1-4, wherein lower frame (3) is provided with means for suspending the trawl door (1) so that it may rest on the stern or a part of the trawler when not in use.

6. Trawl door (1) according to claim 5, wherein said means are lifting points placed below the lower frame (3).

## Patentansprüche

1. Schleppnetzklappe (1) zum Ziehen durch einen Grundschleppnetzfischer, Folgendes umfassend:
einen oberen Rahmen (2), der eine Oberkante der Vorrichtung definiert; einen unteren Rahmen (3), der eine Unterkante der Vorrichtung definiert; Paneele (4, 5), die zwischen dem unteren (3) und dem oberen Rahmen (2) verbunden sind, wobei die Paneele eine Tragflügelkonstruktion aufweisen und an ihren jeweiligen Enden mit den Rahmen verbunden sind und wobei die Paneele übereinander platziert sind, wodurch ein oder mehrere Kanäle gebildet werden, damit Wasser durch die Schleppnetzklappe fließen kann, wenn sie durch den Grundschleppnetzfischer gezogen wird, wobei die Schleppnetzklappe **dadurch gekennzeichnet ist, dass** in den Kanälen Zugpunkte (7) vorgesehen sind, um Anstellwinkel der Schleppnetzklappe relativ zu dem Grundschleppnetzfischer zwischen 10 und 20 Grad zu erzeugen.

2. Schleppnetzklappe (1) nach Anspruch 1, wobei die Zugpunkte in Platten (6) ausgebildet sind, die innerhalb der Kanäle in dem Zwischenbereich zwischen dem unteren (3) und dem oberen (2) Rahmen platziert sind.

3. Schleppnetzklappe (1) nach Anspruch 1 oder 2, wobei einer oder mehrere der Zugpunkte als flexible Zugpunkte konfiguriert sind, die als Scharnierlösung angeordnet sind.

4. Schleppnetzklappe (1) nach Anspruch 3, wobei der eine oder die mehreren flexiblen Zugpunkte als Basiselement mit einem Schwenkpunkt für ein schwenkbares Element mit einem Zugpunkt an dessen Ende konfiguriert sind.

5. Schleppnetzklappe (1) nach einem der Ansprüche 1-4, wobei der untere Rahmen (3) mit Mitteln zum Aufhängen der Schleppnetzklappe (1) bereitgestellt ist, sodass sie bei Nichtgebrauch auf dem Heck oder einem Teil des Grundschleppnetzfischers ruhen kann.

6. Schleppnetzklappe (1) nach Anspruch 5, wobei die Mittel Hebepunkte sind, die unterhalb des unteren Rahmens (3) platziert sind.

## Revendications

1. Panneau de chalut (1) destiné à être tiré par un chalutier, comprenant :
un cadre supérieur (2) définissant un bord supérieur du dispositif ; un cadre inférieur (3) définissant un bord inférieur du dispositif ; des panneaux (4, 5) reliés entre les cadres inférieur (3) et supérieur (2), lesdits panneaux étant de construction aérodynamique et reliés aux cadres à leurs extrémités respectives, et lesdits panneaux sont placés les uns sur les autres, établissant ainsi un ou plusieurs canaux permettant à l'eau de s'écouler à travers la panneau de chalut lorsqu'il est tiré par le chalutier, ledit panneau de chalut étant **caractérisé en ce que** des points de traction (7) sont prévus dans les canaux de manière à produire des angles d'attaque du panneau de chalut par rapport au chalutier compris entre 10 et 20 degrés.

2. Panneau de chalut (1) selon la revendication 1, dans lequel les points de traction sont réalisés en plaques (6) placées à l'intérieur des canaux dans la zone intermédiaire entre les cadres inférieur (3) et supérieur (2).

3. Panneau de chalut (1) selon la revendication 1 ou 2, dans lequel un ou plusieurs des points de traction sont conçus comme des points de traction flexibles disposés comme une solution de charnière.

4. Panneau de chalut (1) selon la revendication 3, dans lequel les un ou plusieurs points de traction flexibles sont conçus comme un élément de base présentant un point de pivotement pour un élément pivotant avec un point de traction à l'extrémité de celui-ci.

5. Panneau de chalut (1) selon l'une quelconque des revendications 1 à 4, dans lequel le cadre inférieur (3) est pourvu de moyens pour suspendre le panneau de chalut (1) de sorte qu'il puisse reposer sur la poupe ou une partie du chalutier lorsqu'il n'est pas utilisé.

6. Panneau de chalut (1) selon la revendication 5, dans lequel lesdits moyens sont des points de levage placés en dessous du cadre inférieur (3).
